**Europäisches Patentamt**

**European Patent Office**

**Office européen des brevets**

(19)

(11) Veröffentlichungsnummer: **0 263 891**
**A1**

# EUROPÄISCHE PATENTANMELDUNG

(12)

(21) Anmeldenummer: **86114174.5**

(22) Anmeldetag: **14.10.86**

(51) Int. Cl.4: **G01K 11/00**

(43) Veröffentlichungstag der Anmeldung:
**20.04.88 Patentblatt 88/16**

(84) Benannte Vertragsstaaten:
**AT BE CH DE ES FR GB GR IT LI LU NL SE**

(71) Anmelder: **Helmut K. Pinsch GmbH & Co.**
**Hansastrasse 13**
**D-2000 Hamburg 13(DE)**

(72) Erfinder: **Hatje, Günter H.**
**Wellingsbüttler Weg 182**
**D-2000 Hamburg 65(DE)**

(74) Vertreter: **Richter, Joachim, Dipl.-Ing. et al**
**Patentanwälte Richter u.Werdermann Neuer**
**Wall 10**
**D-2000 Hamburg 36(DE)**

(54) **Verfahren zur Messung der Temperatur von flüssigem Eisen oder Stahl in einem geschlossenen, verschwenkbaren Schmelzraum, wie z.B. in einem Stahlkonverter.**

(57) Das Verfahren zur Messung der Temperatur von flüssigem Eisen oder Stahl in einem geschlossenen, verschwenkbaren Schmelzraum, wie einem Stahlkonverter, besteht darin, daß unter Berücksichtigung einer groben mechanischen und durch Gase, Schlacke und Rückstände verschmutzten Umgebung im Inneren des Schmelzraumes, eines unbestimmten, sich ständig ändernden Temperaturgefälles und der gegebenen mechanischen Bewegung beim Verschwenken des Schmelzraumes die sich bei einer Zustandsänderung der Schmelze mit oder ohne Verwendung eines eine temperaturabhängige Rekation auslösenden Zusatzes ergebenden Temperaturen kontinuierlich oder diskontinuierlich im Innenraum des Schmelzraumes die Bestimmung der Temperatur durch Messung der Interaktion Molekül/freies Elektron, Messung der Reemissionsdauer aktivierter Leuchtstoffe, des Dampfdruckes, der Pyroelektrizität, der Schallgeschwindigkeit bzw. des Brechungsindex, des Linienspektrums, der Dopplerverbreiterung, der Leitfähigkeit u.dgl. vorgenommen wird, wobei die für die Durchführung der Messungen erforderlichen Einrichtungen als integrierte Bestandteile der Konverterschmelzrauminnenwandausgestaltung sein können.

EP 0 263 891 A1

## Verfahren zur Messung der Temperatur von flüssigem Eisen oder Stahl in einem geschlossenen, verschwenkbaren Schmelzraum, wie z.B. in einem Stahlkonverter

Die Erfindung betrifft ein Verfahren zur Messung der Temperatur von flüssigem Eisen oder Stahl in einem geschlossenen, verschwenkbaren Schmelzraum,wie z.B. in einem Stahlkonverter, in Form eines Stahlkübels mit einer Innenwandauskleidung aus Schamottsteinen.

Entsprechend der vielfältigen Aufgabenstellung bei der Messung von Temperaturen wird eine große Zahl von Effekten meßtechnisch ausgenutzt, bei denen physikalische und chemische Stoffeigenschaften temperaturabhängig sind. Hiervon ausgehend ist eine Vielzahl von Temperaturmeßgeräten mit unterschiedlichen Einsatzbereichen bekannt. Mit Ausnahme fotoelektrischer Temperaturmeßverfahren beruhen alle Temperaturmeßaufnehmer auf dem Transport von Wärme zum Meßfühler. Bei den mechanischen und elektrischen Berührungsthermometern geschieht dieser Wärmetransport durch Wärmeleitung und Konvektion, bei den Strahlungsthermometern,den sogenannten berührungslosen Thermometern, durch Wärmestrahlung. Nach Erreichen des thermischen Gleichgewichtes zwischen dem zu untersuchenden Körper und dem Meßaufnehmer kann dann auf die gemessene Temperatur geschlossen werden.

Während Stabausdehnungsthermometer bis zu einem Temperaturbereich von 1000°C eingesetzt werden, ermöglichen Gesamtstrahlungspyrometer , Teilstrahlungspyrometer und Farbpyrometer die Temperaturerfassung auch in oberhalb 1000°C liegenden Bereichen, die zum Teil weit über 2000°C reichen.

Darüber hinaus sind auch Thermopaare bekannt, die vor allem bei höheren Temperaturen verwendet werden. Diese eignen sich für die Fernanzeige und Registrierung von Temperaturen sowie für die automatische Temperaturregelung. Ein besonderer Vorzug ist das geringe Volumen der Meßstelle. Die wichtigsten Thermopaare sind Kupfer-Konstantan, Eisen-Konstantan, Nickelchrom-Nickel und Platinrhodium-Platin. Derartige Thermopaare bestehen aus zwei Drähten aus verschiedenen Werkstoffen, deren Enden an einer Seite, nämlich der Meßstelle, z.B. durch Löten oder Schweißen, leitend miteinander verbunden sind, während die anderen Enden die Vergleichsstelle bilden, die durch die Zuleitung an das Meßgerät angeschlossen wird. Wenn die Meßstelle von der Vergleichsstelle weiter entfernt ist, kann das Thermopaar durch eine Ausgleichsleitung verlängert werden. In diesem Fall ist dann die Verbindung zwischen Ausgleichsleitung und Zuleitung die Vergleichsstelle. Da die Thermospannung von dem Temperaturunterschied zwischen Meß-und Vergleichsstelle abhängt, muß die Vergleichsstellentemperatur, also die Vergleichstemperatur, möglichst konstant sein. Für dieses Konstanthalten sind verschiedene Möglichkeiten entwickelt worden, so daß auch Temperaturbereiche erfaßt werden, die oberhalb 1000°C liegen.

Darüber hinaus sind auch Temperaturkennkörper bekannt, welche bei bestimmter Temperatur niederschmelzen; es stehen für 100°C bis 1600°C Schmelzkörper zur Verfügung und ihr Einsatz ist für all diejenigen thermischen Betriebsvorgänge gedacht, bei denen Thermometer nicht verwendet werden können.

Zur Anzeige von Hitzegraden zwischen 500°C bis 2000°C sind Segekegel bekannt, die z.b. beim Brennen von Tonwaren , Glas, Kalk, Zement u.dgl. zur Bestimmung der Ofentemperatur eingesetzt werden. Hierbei handelt es sich um kleine, standardisierte Kegel aus wechselnden Mengen von Ton, Flußmitteln, Quarz u.dgl., die bei bestimmten Temperaturen schmelzen und dadurch die bei der Herstellung von keramischem Material erforderlichen Hitzegrade anzeigen.

Ein besonderes Problem stellt jedoch die Temperaturerfassung bei der Stahlerzeugung, z.B. nach dem LD-Verfahren,dar, bei dem birnenförmige LD-Konverter verwendet werden. Hierbei ist es oftmals erforderlich, daß nicht nur die Badtemperaturen, die fast linear ansteigen, sondern auch die Abstichtemperaturen des flüssigen Stahls überwacht werden, die im letzteren Fall zwischen 1590°C und 1620°C liegen. Eine Vielzahl von bekannten Temperaturmeßgeräten ist jedoch nicht geeignet für die Überwachung dieser Temperaturen, weil eine Anordnung in dem Konverterinnenraum die konstruktive Ausgestaltung dieser Temperaturmeßgeräte nicht zuläßt. Aus diesem Grunde werden Temperaturmeßeinrichtungen verwendet, die so ausgestaltet sind, daß sie nur für eine einmalige Benutzung geeignet sind, wodurch hohe Kosten entstehen und eine wirtschaftlich vertretbare Temperaturmessung dadurch nicht möglich ist, da Stahlkonverter meist in Form von Stahlkübeln mit einer inneren Auskleidung von geeigneten Schamottsteinen an die Art der Messung einige besondere Randprobleme stellen, die gegeben sind durch die grobe mechanische Umgebung , die Verschmutzung der Umgebung durch Gasepartikelchen, durch die Umgebungstemperatur und das Temperaturgefälle, das durch die mechanische Bewegung, d.h. durch das Verschwenken der Stahlkübel, gegeben ist.

Die Erfindung löst die Aufgabe, ein Verfahren zur Temperaturmessung von flüssigem Eisen oder Stahl in einem geschlossenen oder verschwenkbaren Schmelzraum gemäß der eingangs beschriebenen Art zu schaffen, mit dem unter Berücksichtigung einer groben, mechanischen und durch Gase, Schlacke und Rückstände verschmutzten Umgebung im Inneren des Schmelzraumes , eines unbestimmten, sich ständig wechselnden Temperaturgefälles und der gegebenen mechanischen Bewegung beim Verschwenken des Schmelzraumes, eine genaue, kontinuierliche oder diskontinuierliche Temperaturbestimmung der in dem Schmelzraum befindlichen Schmelze wirtschaftlich durchführbar ist.

Zur Lösung dieser Aufgabe wird ein Verfahren zur Messung der Temperatur von flüssigem Eisen oder Stahl in einem geschlossenen, verschwenkbaren Schmelzraum, wie z.B. in einem Stahlkonverter, gemäß der eingangs beschriebenen Art vorgeschlagen, bei dem erfindungsgemäß unter Berücksichtigung einer groben mechanischen und durch Gase, Schlacke und Rückstände verschmutzten Umgebung im Inneren des Schmelzraumes, eines unbestimmten, sich ständig ändernden Temperaturgefälles und der gegebenen mechanischen Bewegung beim Verschwenken des Schmelzraumes die sich bei einer Zustandsänderung der Schmelze mit oder ohne Verwendung eines eine temperaturabhängige Reaktion auslösenden Zusatzes ergebenden Temperaturen kontinuierlich oder diskontinuierlich im Inneren des Schmelzraumes dadurch gemessen werden, daß

a) die Interaktion von Molekülen der flüssigen Masse zu freien Elektronen unter Ausnutzung des durch die thermisch bedingten Molekularbewegung bei zunehmender Temperatur erfolgenden Zusammenstoßes zwischen Molekülen und freien Elektronen und der dadurch bedingten geringen Potentialverschiebung im Gesamtvolumen der Schmelze mittels der Rauschthermometrie erfaßt wird, oder

b) der zeitliche Ablauf der temperaturabhängigen Reemissionsdauer (Abgabe der eingestrahlten Energie) der Schmelze entsprechend aktivierter, gepumpter Leuchtstoffe als direkter Meßwert zur Bestimmung der Temperatur mittels eines Strahlungspyrometers erfaßt wird, oder

c) der flüssigen Masse kleine, im Millimeterbereich liegende Mengen von Leuchtstoffen mit temperaturabhängiger Reaktion, wie Leuchterscheinungen, alpha-Strahlung od.dgl., zugesetzt und die temperaturabhängige Reaktion zur Temperaturbestimmung verwendet wird, oder

d) die auf der Schmelze schwimmende Schlacke oder durch durch eine lokale Abkühlung erzeugte Verschlackung erhaltene Strahlungsquelle als schwarzer Strahler verwendet wird, dessen -

schwarze Strahlungstemperatur insgesamt oder in einem großen Wellenlängenbereich mittels eines Gesamtstrahlungs-Pyrometers gemessen wird, oder

e) der Dampfdruck bei einer der flüssigen Masse entnommenen Probe außerhalb des Schmelzraumes gemessen und hieraus die Temperatur in dem Erhitzungsraum ermittelt wird, oder

f) der flüssigen Masse Substanzen zugesetzt werden und aus dem erhaltenen Linienspektrum die jeweilige Temperatur errechnt wird , oder

g) die Schallgeschwindigkeit, wie z.B. mit einem Ultraschall-Resonanzthermometer, zur Temperaturmessung herangezogen wird, wobei außen an der Wand des Schmelzraumes Schallinsen, insbesondere aus Keramik, angebracht werden, die eine gezielte Ein-und Auskopplung unabhängig vom Typ des Schmelzraumes, wie Konverter od.dgl., ermöglichen , oder

h) bei freiem,optischem Zugang zur Schmelze das abgestrahlte Linienspektrum vermittels eines Spektralfotometers gemessen und durch Analyse der Anwesenheit und Amplitude signifikanter Linien über den Durchmischungsgrad die Temperatur der Schmelze ermittelt wird, oder

i) bei freiem, optischem Zugang der Schmelze die durch Temperatur hervorgerufene Dopplerverbreiterung einzelner Linien, insbesondere die Linienverbreiterung diskreter Linien mittels der Raman-Spektroskopie erfaßt und zur Temperaturbestimmung herangezogen wird, oder

j) durch Anordnung von Stäben aus Diamant in der Wand des Schmelzraumes, wobei die thermischen, abhängigen Eigenschaften optisch z.B. über eine Glasfaser als Aluminiumoxid (künstlicher Czochralskigezogener Saphir) erfaßt und zur Temperaturbestimmung verwendet wird, wobei die Stäbe auch in die Schmelze während der Messung eingetaucht sein können, oder

k) die elektrische Leitfähigkeit der Schmelze gemessen wird, was durch Kontaktmessung des elektrischen Widerstandes der Schmelze erfolgt, wobei an geeigneten Stellen der Wand des Schmelzraumes elektrische Kontakte aus inertem, hochschmelzendem Material, wie Graphit, oder amorphem ("gläsernem") auch halbleitendem Material angeordnet sind, wobei auch Schmelzraumwand auskleidende Materialien erhöhter Leitfähigkeit verwendbar sind, wobei die zur Durchführung der Temperaturmessung erforderlichen Meßgeräte als integrierte Bestandteile der Schmelzrauminnenwandausgestaltung ausgebildet sein können, wobei die Innenwandauskleidung selbst als Sensorschicht mit den Eigenschaften und dem Aufbau der verwendeten Meßgeräte ausgebildet sind.

Mit derartigen Verfahren ist es erstmals möglich, die Badtemperaturen einer Schmelze in einem Konverter kontinuierlich zu überwachen und auch Abstichtemperaturen des flüssigen Stahls zu erfassen, ohne daß eine ständige Erneuerung der Temperaturmeßeinrichtungen oder -geräte vorgenommen werden muß. Die Temperaturmessung ist auch dann durchführbar, wenn durch mechanische Begungen beim Verschwenken des Schmelzraumes die Schmelze Bewegungsänderungen unterworfen ist.

Die für die einzelnen Verfahren verwendeten und an sich bekannten Meßeinrichtungen werden dabei zum integrierten Bestandteil eines Konverters, in dem näich die Schmelzraumiminnenwand so ausgestatet und ausgebildet ist, daß diese die fürie Temperaturmessung erforderlichen Einrichtungen aufnehmen kann, wobei verteilt um den Innenraum in der Schamottauskleidung des Konverters eine Vielzahl von Meßstellen eingerichtet und vorgesehen sein kann, so daß die Innenwandauskleidung des Konverers selbst zur Sensorschicht erhoben wird. Durch die Anordnung der für die Durchführung der Temperaturmessung erforderlichen Geräte in der Schmelzrauminnenwand bzw. in den die Innenwand bildenden Schamottsteinen, die hohen Temperaturen ausgesetzt sind und keiner wesentlichen Veränderung unterworfen sind, ist gleichzeitig ein ausreichender Schutz der Temperaturmeßeinrichtungen gegeben, die dann in Bezug auf ihre empfindlichen Meßeinrichtungsteile keiner direkten Wärmestrahlung ausgesetzt sind.

Das erfindungsgemäße Verfahren wird anhand der in der Zeichnung dargestellten Ausführungsbeispiele erläutert. Es zeigt

Fig. 1 teils in Ansicht, teils in einem senkrechten Schnitt ein LD-Konverter,

Fig. 2 einen Abschnitt der Konverterwand mit einer Anordnung von Diamantstäben zur Erfassung thermischer Eigenschaften in einem senkrechten Schnitt,

Fig. 3 einen Abschnitt der Konverterwand mit an der Innenwandfläche angeordneten Kontaktmeßeinrichtungen in einem senkrechten Schnitt und

Fig. 4 einen Abschnitt der Konverterwand mit an der Konverterwandaußenfläche angeordneter Schallinse in einem senkrechten Schnitt.

Die verschiedenen Temperaturmessungen sind in den nachstehend aufgeführten Beispielen zusammengefaßt:

Beispiel 1

Die Interaktion von Molekühlen der flüssigen Masse zu freien Elektronen unter Ausnutzung des durch die thermisch bedingte Molekularbewegung bei zunehmender Temperatur erfolgenden Zusammenstoßes zwischen Molekülen und freien Elektronen und der dadurch bedingten geringen Potentionverschiebung im Gesamtvolumen der Schmelze wird mittels der Rauschthermometrie erfaßt. Dabei erfolgt die Temperaturmessung mittels eines in noch nicht bekannter Weise ausgebildeten Rauschthermometers, wobei auch rauscharme Vorverstärker zur Rauschspannungsmessung herangezogen werden können. Daneben ist auch der Einsatz von Korrelations-Rauschthermometern möglich. Die hierfür erforderliche Meßanordnung besteht aus identischen rauscharmen Verstärkern, Bandfiltern und Treiberstufen, deren Ausgangssignale zwei Ströme darstellen. Als Multiplikator wird das Hall-Element H verwendet, das aus einem polykristallinen InSb-Scheibchen in einem ferromagnetischen Topfkreis besteht. Dabei wird der Ausgangsstromkreis direkt durch H geschickt. Durch den zweiten Strom wird in zwei Feldspulen die magnetische Induktion erzeugt, woraus sich dann die Hall-Spannung ergibt. Bei dieser Meßmethode liefert der Hall-Effekt die Muliplikation, während der zeitliche Mittelwert durch RC-Filter gebildet wird. Die Zeitkonstante des Filters muß dabei für eine ausreichende Mittelwertbildung passend gewählt werden, denn eine große Zeitkonstante liefert einen genauen Mittelwert; sie kann jedoch kurzzeitig Änderungen der Meßgröße nicht folgen.

Beispiel 2

Der zeitliche Ablauf der temperaturabhängigen Reemissionsdauer , d.h. die Abgabe der eingestrahlten Energie der Schmelze entsprechend aktivierter, gepumpter Leuchtstoffe, wird als direkter Meßwert zur Bestimmung der Temperatur mittels eines Strahlungspyrometers erfaßt, welches in an sich bekannter Weise ausgebildet ist. Mittels eines derartigen Strahlungspyrometers läßt sich die Temperatur einer strahlenden Substanz durch Messung der imitierten Energie oder der mit der Temperatur zusammenhängenden Wellenlänge bestimmen. Darüber hinaus sind auch Gesamtstrahlungspyrometer oder , soweit anwendbar, auch optische Pyrometer verwendbar.

### Beispiel 3

Der flüssigen Schmelze werden kleine, im Millimeterbereich liegende Mengen von Stoffen mit temperaturabhängiger Reaktion, wie Leuchterscheinung, alpha-Strahlung od.dgl. zugesetzt, wobei dann die temperaturabhängige Reaktion zur Temperaturbestimmung verwendet wird.

### Beispiel 4

Die auf der Schmelze schwimmende Schlacke oder durch durch eine lokale Abkühlung erzeugte Verschlackung erhaltene Strahlungsquelle wird als - schwarzer Strahler verwendet, dessen schwarze Strahlungstemperatur insgesamt oder in einem großen Wellenlängenbereich mittels eines Gesamtstrahlungspyrometers bekannter Bauart gemessen wird.

### Beispiel 5

Zur Temperaturbestimmung wird der Dampfdruck bei einer der flüssigen Masse entnommenen Probe außerhalb des Schmelzraumes gemessen und hieraus die Temperatur in dem Erhitzungsraum vermittels bekannter Temperaturmeßeinrichtungen ermittelt.

### Beispiel 6

Es werden der flüssigen Masse Substanzen zugesetzt, wobei dann aus dem erhaltenen Linienspektrum die jeweilige Temperatur errechnet wird.

### Beispiel 7

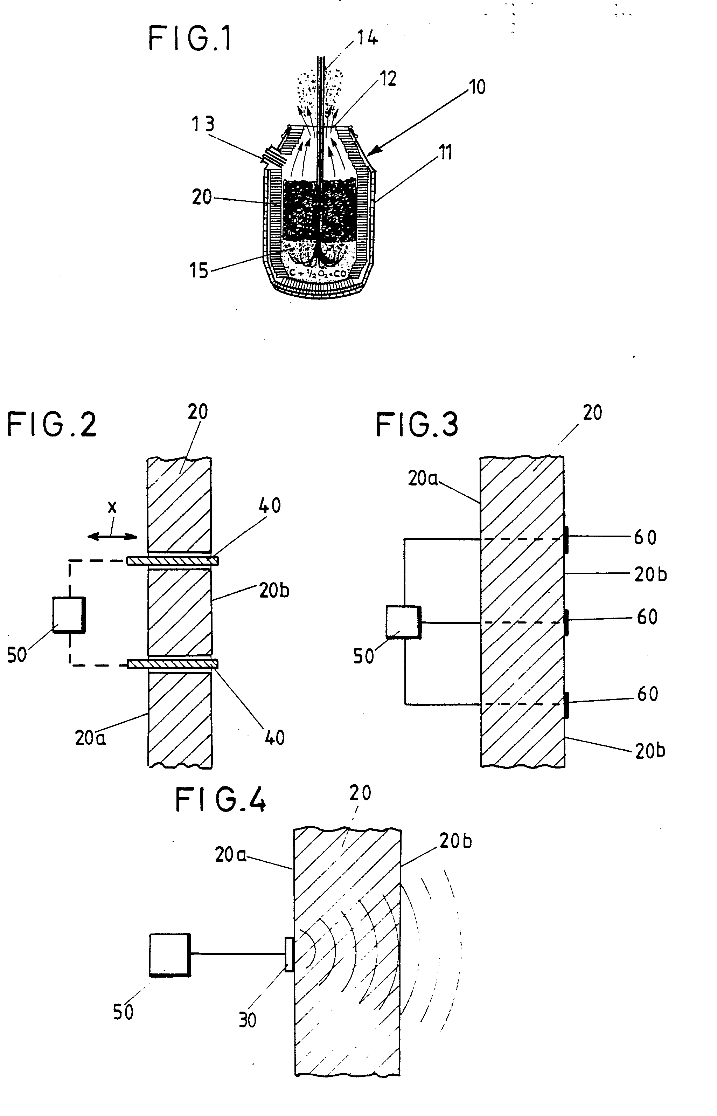

Zur Temperaturmessung kann auch die Schallgeschwindigkeit herangezogen werden, und zwar unter Verwendung eines an sich bekannten Ultraschall-Resonanzthermometers, wobei auf der Außenwandfläche 20a der den Schmelzraum 15 eines in Fig. 1 dargestellten, in an sich bekannter Weise ausgebildeten LD-Konverters begrenzenden Wand 20 eine,insbesondere aus Keramik, hergestellte, in an sich bekannter Weise ausgebildete Schallinse 30 angeordnet ist, die eine gezielte Ein- und Auskopplung unabhängig vom Typ des Schmelzraumes ermöglicht (Fig.4). Die Anzahl der auf der Außenwandfläche der Konverterwand 20 angeordneten Schallinsen richtet sich jeweils nach der Größe des Konverters und der Menge der jeweils zu erzeugenden Schmelze. Die Messung der Schallgeschwindigkeit erfolgt dann mit einem Ultraschall-Resonanzthermometer, was in Fig. 4 bei 50 angedeutet ist.

### Beispiel 8

Besteht ein freier optischer Zugang zu der Schmelze im Innenraum des Konverters, wird das abgestrahlte Linienspektrum mittels eines an sich bekannten Spektralfotometers gemessen und durch Analyse der Anwesenheit und Amplitude signifikanter Linien über den Durchmischungsgrad die Temperatur der Schmelze ermittelt.

### Beispiel 9

Bei optischem Zugang der Schmelze kann die durch Temperatur hervorgerufene Dopplerverbreiterung einzelner Linien, insbesondere die Linienverbreiterung diskreter Linien, vermittels der Raman-Spektroskopie unter Verwendung bekannter Einrichtungen erfaßt und zur Temperaturbestimmung herangezogen werden. Hier wird der Umstand angewandt, daß in einem Hochtemperaturplasma die Spektrallinien durch verschiedene Wechselwirkungen zum Teil erheblich verbreitert und verschoben werden. Die durch die Strahlungsdämpfung bestimmte natürliche Linienbreite liegt dabei im Bereich von $10^{-5}$nm und kann dann vernachlässig werden.

### Beispiel 10

Wie Fig. 2 zeigt, können in der Konverterwand 20 Stäbe aus Diamant 40 angeordnet sein, wobei die thermischen, abhängigen Eigenschaften optisch z.B. über eine in der Zeichnung nicht dargestellte Glasfaser aus Aluminiumoxid, d.h. einem künstlichen Czochralskigezogenen Saphir. erfaßt und zur Temperaturbestimmung verwendet werden. wobei die Diamantstäbe auch in die Schmelze während der Messung eingetaucht sein können. Hierzu ist es von Vorteil, wenn mittels geeigneter Einrichtungen die Diamantstäbe 40 in Pfeilrichtung X in der Konverterwand 20 verschiebbar angeordnet sind, so daß ein Ein-und Ausfahren dieser Diamantstäbe in die Schmelze möglich ist. Die hierfür erforderliche Meßeinrichtung ist bei 50 in Fig. 2 an gedeutet.

Beispiel 11

Es kann auch die elektrische Leitfähigkeit der Schmelze gemessen werden, was durch Kontaktmessung des elektrischen Widerstandes der Schmelze erfolgt. Hierzu sind an geeigneten Stellen der Konverterwand 20 im Innenwandbereich 20b elektrische Kontakte 60 aus inertem, hochschmelzendem Material, wie Graphit, oder amorphem ("gläsernem") auch halbleitendem Materail angeordnet, wobei auch Schmelzraumwand auskleidende Materialien erhöhter Leitfähigkeit verwendbar sind. Die Kontakte 60 stehen ebenfalls mit einem bei 50 in Fig.3 angedeuteten Meßgerät in Verbindung. Die Anordnung der Kontakte wird sich jeweils nach der Größe des Konverterinnenraumes richten.

Ein in an sich bekannter Weise ausgebildeter LD-Konverter ist in Fig. 1 dargestellt. Dieser Konverter 10 besteht aus dem eigentlichen Konvertergefäß 11, welches birnenförmig ausgebildet ist. Im oberen Bereich ist eine Öffnung 12, die Konvertermündung, ausgebildet. die Innenwandfläche des Konvertergefäßes 11 ist mit einer feuerfesten Ausmauerung 20 versehen, die aus Schamottsteinen besteht. Bei 13 ist eine Auslaßöffnung angedeutet. Mit 14 ist eine Sauerstofflanze bezeichnet, über die ein Sauerstoffstrahl eingeblasen wird. Der gesamte Konverter ist, was in der Zeichnung nicht dargestellt ist, verschwenkbar in einer Halterung gelagert.

## Ansprüche

Verfahren zur Messung der Temperatur von flüssigem Eisen oder Stahl in einem geschlossenen, verschwenkbaren Schmelzraum, wie z.B. in einem Stahlkonverter, in Form eines Stahlkübels mit einer Innenwandauskleidung aus Schamottsteinen, dadurch gekennzeichnet, daß unter Berücksichtigung einer groben mechanischen und durch Gase, Schlacke und Rückstände verschmutzten Umgebung im Inneren des Schmelzraumes, eines unbestimmten, sich ständig ändernden Temperaturgefälles und der gegebenen mechanischen Bewegung beim Verschwenken des Schmelzraumes die sich bei einer Zustandsänderung der Schmelze mit oder ohne Verwendung eines eine temperaturabhängige Reaktion auslösenden Zusatzes ergebenden Temperaturen kontinuierlich oder diskontinuierlich im Inneren des Schmelzraumes dadurch gemessen werden, da

a) die Interaktion von Molekülen der flüssigen Masse zu freien Elektronen unter Ausnutzung des durch die thermisch bedingte Molekularbewegung bei zunehmender Temperatur erfolgenden Zusammenstoßes zwischen Molekülen und freien Elektronen und der dadurch bedingten geringen Potentialverschiebung im Gesamtvolumen der Schmelze mittels der Rauschthermometrie erfaßt wird, oder

b) der zeitliche Ablauf der temperaturabhängigen Reemissionsdauer (Abgabe der eingestrahlten Energie) der Schmelze entsprechend aktivierter, gepumpter Leuchtstoffe als direkter Meßwert zur Bestimmung der Temperatur mittels eines Strahlungspyrometers erfaßt wird, oder

c) der flüssigen Masse kleine im Millimeterbereich liegende Mengen von Stoffen mit temperaturabhängiger Reaktion, wie Leuchterscheinungen, alpha-Strahlung od.dgl. zugesetzt und die temperaturabhängige Reaktion zur Temperaturbestimmung verwendet wird, oder

d) die auf der Schmelze schwimmende Schlacke oder durch durch eine lokale Abkühlung erzeugte Verschlackung erhaltene Strahlungsquelle als schwarzer Strahler verwendet wird, dessen - schwarze Strahlungstemperatur insgesamt oder in einem großen Wellenlängenbereich mittels eines Gesamtstrahlungspyrometers gemessen wird, oder

e) der Dampfdruck bei einer der flüssigen Masse entnommenen Probe außerhalb des Schmelzraumes gemessen und hieraus die Temperatur in dem Erhitzungsraum ermittelt wird, oder

f) der flüssigen Masse Substanzen zugesetzt werden und aus dem erhaltenen Linienspektrum die jeweilige Temperatur errechnet wird, oder

g) die Schallgeschwindigkeit, wie z.B. mit einem Ultraschall-Resonanzthermometer, zur Temperaturmessung herangezogen wird, wobei außen an der Wand des Schmelzraumes Schallinsen, insbesondere aus Keramik, angebracht werden, die eine gezielte Ein-und Auskopplung unabhängig vom Typ des Schmelzraumes, wie Konverter od.dgl., ermöglichen, oder

h) bei freiem optischen Zugang zur Schmelze das abgestrahlte Linienspektrum vermittels eines Spektralfotometers gemessen und durch Analyse der Anwesenheit und Amplitude signifikanter Linien über den Durchmischungsgrad die Temperatur der Schmelze ermittelt wird, oder

i) bei freiem, optischen Zugang der Schmelze durch Temperatur hervorgerufene Dopplerverbreiterung einzelner Linien, insbesondere die Linienverbreiterung diskreter Linien mittels der Raman-Spektros kopie erfaßt und zur Temperaturbestimmung herangezogen wird, oder

j) durch Anordnung von Stäben aus Diamant in der Wand des Schmelzraumes, wobei die thermischen, abhängigen Eigenschaften optisch z.B. über eine Glasfaser als Aluminiumoxid (künstlicher Czochralskigezogener Saphir) erfaßt und zur Temperaturbestimmung verwendet wird, wobei die Stäbe auch in die Schmelze während der Messung eingetaucht sein können, oder

k) die elektrische Leitfähigkeit der Schmelze gemessen wird, was durch Kontaktmessung des elektrischen Widerstandes der Schmelze erfolgt, wobei an geeigneten Stellen der Wand des Schmelzraumes elektrische Kontakte aus inertem, hochschmelzendem Material, wie Graphit, oder amorphem ("gläsernem") auch halbleitendem Material angerodnet sind, wobei auch Schmelzraumwand auskleidende Materialien erhöhter Leitfähigkeit verwendbar sind,

wobei die zur Durchführung der Temperaturmessung erforderlichen Meßgeräte als integrierte Bestandteile der Schmelzrauminnenwandausgestaltung ausgebildet sein können, wobei die Innenwandauskleidung selbst als Sensorschicht mit den Eigenschaften und dem Aufbau der verwendeten Meßgeräte ausgebildet sind.

# FIG.1

# FIG.2

# FIG.3

# FIG.4

**Europäisches Patentamt**

# EUROPÄISCHER RECHERCHENBERICHT

Nummer der Anmeldung

EP 86 11 4174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | V.D.I. NACHRICHTEN, Band 23, Nr. 45, 5. November 1969, Seite 20, Dusseldorf, DE; "Temperaturmessung in Stahlschmelzen" * Insgesamt * | 1 | G 01 K 11/00 |
| X | IRON & STEEL, Band 37, Nr. 3, März 1964, Seiten 86-90, Guildford, GB; J.D. SHARP et al.: "Temperature measurements in steelmaking processes" * Seite 90, rechte Spalte, Zeilen 21-53 * | 1 | |
| X | DE-B-1 153 784 (HUTTENWERK OBERHAUSEN) * Insgesamt * | 1 | |
| X | DE-B-1 508 250 (SIEMENS AG) * Spalte 1, Zeile 48 - Spalte 2, Zeile 23; Figuren * | 1 | RECHERCHIERTE SACHGEBIETE (Int. Cl.4) G 01 K |
| Y | PATENT ABSTRACTS OF JAPAN, Band 8, Nr. 196 (P-299)[1633], 8. September 1984; & JP-A-59 84 129 (HITACHI DENSEN K.K.) 15-05-1984 * Zusammenfassung * | 1 | |

--- -/-

Der vorliegende Recherchenbericht wurde fur alle Patentanspruche erstellt

| Recherchenort DEN HAAG | Abschlußdatum der Recherche 06-07-1987 | Pruler RAMBOER P. |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : alteres Patentdokument, das jedoch erst am oder nach dem Anmeldedatum veroffentlicht worden ist
D : in der Anmeldung angeführtes Dokument
L : aus andern Grunden angefuhrtes Dokument
& : Mitglied der gleichen Patentfamilie, übereinstimmendes Dokument

EPA Form 1503 03 82

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 6, Nr. 88 (P-118)[966], 26. Mai 1982; & JP-A-57 24 834 (SHIN NIPPON SEITETSU K.K.) 09-02-1982 * Zusammenfassung * | 1 | |
| | --- | | |
| A | FR-A-2 009 600 (HOESCH) * Insgesamt * | 1 | |
| | --- | | |
| A | LU-A- 42 087 (ARBED) * Insgesamt * | 1 | |
| | --- | | |
| A | BE-A- 659 708 (ACIERES ET MINIERES DE LA SAMBRE) * Insgesamt * | 1 | |
| | ----- | | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 06-07-1987 | RAMBOER P. |